# EUROPÄISCHE PATENTSCHRIFT

(11) **EP 0 775 013 B1**
(45) Veröffentlichungstag und Bekanntmachung des Hinweises auf die Patenterteilung: **19.08.1998**
(21) Anmeldenummer: 95918524.0
(22) Anmeldetag: 16.05.1995
(51) Int. Cl.: B01D 53/94, B01D 53/86, B01D 53/30

(54) **VERFAHREN ZUR KATALYTISCHEN UMSETZUNG VON IM ABGAS EINES VERBRENNUNGSMOTORS ENTHALTENEN STICKOXIDEN**
METHOD FOR THE CATALYTIC REACTION OF OXIDES OF NITROGEN IN THE EXHAUST FROM AN INTERNAL-COMBUSTION ENGINE
PROCEDE DE CONVERSION CATALYTIQUE D'OXYDES D'AZOTE CONTENUS DANS LES GAZ D'ECHAPPEMENT D'UN MOTEUR A COMBUSTION INTERNE

(30) Priorität: 10.08.1994 DE 4428329
(43) Veröffentlichungstag der Anmeldung: 28.05.1997
(73) Patentinhaber: SIEMENS AKTIENGESELLSCHAFT, 80333 München (DE)
(72) Erfinder: NEUFERT, Ronald, D-96215 Lichtenfels (DE); MATHES, Wieland, D-96247 Michelau (DE); SCHOBERT-SCHÄFER, Dagmar, D-96047 Bamberg (DE); HOFMANN, Lothar, D-96224 Burgkunstadt (DE)
(86) Internationale Anmeldenummer: DE9500646
(87) Internationale Veröffentlichungsnummer: WO9604980

(56) Entgegenhaltungen:
- EP-A- 0 362 483
- EP-A- 0 554 766
- EP-A- 0 555 746
- DE-A- 3 337 793
- DE-A- 3 615 021
- DE-A- 3 721 572
- DE-A- 4 237 705
- DE-C- 4 217 552

## Beschreibung

Die Erfindung bezieht sich auf ein Verfahren zur katalytischen Umsetzung von im Abgas eines Verbrennungsmotors enthaltenen Stickoxiden, bei dem ein Reduktionsmittel in Strömungsrichtung des Abgases vor einem Denitrierungs-Katalysator in das Abgas eingebracht wird.

Bei der selektiven katalytischen Reduktion (SCR) von Stickoxiden muß einem die Stickoxide enthaltenden Abgas ein Reduktionsmittel, meist Ammoniak oder eine Ammoniak freisetzende Substanz, wie z. B. eine wäßrige Harnstofflösung, zugegeben werden. Das Reduktionsmittel wird zusammen mit den Stickoxiden an einem sogenannten SCR-Katalysator, der meist auf der Basis von Titandioxid mit Zusätzen von Metalloxiden, wie z.B. Vanadium-, Molybdän- und/oder Wolframoxid, besteht, zu umweltunbedenklichem Stickstoff, Sauerstoff und Wasser umgesetzt.

Bei einer instationären Betriebsweise des Abgaserzeugers (Motor, Feuerung), wie sie vor allem bei Fahrzeugmotoren auftritt, variieren die Stickoxidkonzentration, der Abgasmassenstrom und die Abgastemperatur in weiten Bereichen. Diese Tatsache stellt eine erhebliche Anforderung an die Dosierstrategie und die Dosiergenauigkeit für das in das Abgas eingebrachte Reduktionsmittel dar.

Bei den meisten derzeit bekannten Verfahren zur Dosierung des Reduktionsmittels wird das Reduktionsmittel proportional zum Stickoxidmengenstrom in das Abgas eingebracht. Dabei muß der dem Abgas zugeführte Reduktionsmittelstrom in Relation zur Stickoxidkonzentration deutlich unterstöchiometrisch gewählt werden, um einen Durchbruch des Reduktionsmittels, insbesondere einen Ammoniakdurchbruch, sicher zu vermeiden. Damit wird jedoch die katalytische Aktivität des Katalysators nicht vollständig ausgenutzt, so daß die grundsätzlich mit dem Katalysator erreichbaren höheren Umsatzraten aufgrund dieser Dosierungsstrategie nicht erreicht werden können.

Desweiteren sind aus der EP 0 515 857 A1, der DE 42 17 552 C1, der EP 0 554 766 A1 und der EP 0 362 483 A1 Verfahren bekannt, bei welchen das Reduktionsmittel pulsweise überstöchiometrisch zudosiert wird und der Katalysator in den Zeitintervallen zwischen zwei Pulsen "leer" gefahren wird. Auch diese Verfahren sind mit dem obengenannten Nachteil behaftet.

Auch aus der DE 42 37 705 A1, der DE 36 15 021 A1, der EP 0 555 746 A1, der DE 33 37 793 A1 und der DE 37 21 572 A1 sind Verfahren zur Dosierung der einzubringenden Reduktionsmittelmenge bekannt. In der DE 42 37 705 A1, der EP 0 555 746 A1 und der DE 33 37 793 A1 wird die Dosiermenge des Reduktionsmittels über die Stickoxid-Konzentration und gegebenenfalls über die Temperatur des Abgases gesteuert. In der DE 36 15 021 A1 und der DE 37 21 572 A1 wird die Dosiermenge des Reduktionsmittels indirekt über den Betriebszustand eines Verbrennungsmotors charakterisierende Parameter gesteuert.

Der Erfindung liegt die Aufgabe zugrunde, ein Verfahren zur katalytischen Umsetzung von im Abgas eines Verbrennungsmotors enthaltenen Stickoxiden anzugeben, mit dem die katalytische Aktivität des Katalysators weitgehendst ausgenutzt und gleichzeitig ein Ammoniakschlupf oberhalb eines tolerierbaren Grenzwertes vermieden wird.

Diese Aufgabe wird erfindungsgemäß durch ein Verfahren gelöst, bei dem ein Reduktionsmittel in Strömungsrichtung des Abgases vor einem Denitrierungs-Katalysator in das Abgas eingebracht wird, wobei das Reduktionsmittel nur in Betriebsintervallen, in denen der Katalysator bevorzugt Reduktionsmittel speichert, insbesondere während der Startphase des Verbrennungsmotors und beim Betrieb mit sinkender und gegebenenfalls nahezu konstanter Abgastemperatur, unter Berücksichtigung der temperaturabhängigen Speicherkapazität des Denitrierungs-Katalysators für das Reduktionsmittel überstöchiometrisch im Bezug zur Stickoxidkonzentration zudosiert wird und wobei das Reduktionsmittel ansonsten unterstöchiometrisch zudosiert wird.

Auf diese Weise wird unter Berücksichtigung der temperaturabhängigen Speicherkapazität des Denitrierungs-Katalysators für das Reduktionsmittel, d. h. auch unter Berücksichtigung der maximal im Katalysator speicherbaren Reduktionsmittelmenge, in Betriebsintervallen, in denen der Katalysator bevorzugt Reduktionsmittel speichert, vermehrt Reduktionsmittel zur Einspeicherung aufgrund der überstöchiometrischen Zudosierung angeboten. In den übrigen Betriebsphasen genügt eine geringfügig unterstöchiometrische Zudosierung des Reduktionsmittels, damit zusammen mit gespeichertem und zudosiertem Reduktionsmittel einen vollständiger Stickoxidabbau erreicht wird. Weil der Katalysator auf diese Weise zu jedem Zeitpunkt im Bereich eines bevorzugten Füllstandes, der im allgemeinen vom maximalen Füllstand abweicht, gehalten wird, werden besonders hohe Stickoxidumsatzraten erzielt. Gleichzeitig und im besonderen durch die Berücksichtigung der temperaturabhängigen Speicherkapazität des Katalysators für das Reduktionsmittel kann der Katalysator aber auch bei einem positiven Lastsprung, was zu einer Erhöhung der Abgastemperatur und damit zu einer Desorption von am Katalysator gespeichertem Reduktionsmittel führt, dieses desorbierte Reduktionsmittel noch entlang des Durchströmungsweges adsorbieren und/oder bei der katalytischen Umsetzung verbrauchen. Ein Ammoniakschlupf oberhalb eines tolerierbaren Grenzwertes, der für Ammoniak bei etwa 3 bis 5 ppm liegt, wird auf diese Weise sicher vermieden.

Zur Berücksichtigung der temperaturabhängigen Speicherkapazität des Katalysators für das Reduktionsmittel und damit zur Bestimmung der noch vom Katalysator speicherbaren Reduktionsmittelmenge oder der vom Katalysator desorbierenden Reduktionsmittelmenge ist es vorteilhaft, wenn die Temperatur des Katalysators prozeßbegleitend erfaßt wird. Dabei kann die Temperatur des Katalysators beispielsweise am Ein- und Ausgang des Katalysators gemessen oder aber auch rechnerisch über eine Messung der Abgastemperatur bestimmt werden.

Zur Bestimmung des Grades einer unterstöchiometrischen oder einer überstöchiometrischen Zudosierung des Reduktionsmittels ist es zweckmäßig, wenn der aktuelle Füllstand des Katalysators prozeßbegleitend bestimmt wird. Dies kann beispielsweise erfolgen durch eine fortschreitende Aufsummierung der Stickoxidmengen und der Reduktionsmittelmengen ausgehend von einem definierten Anfangsfüllstand des Katalysators. Bei gleichzeitiger Berücksichtigung der Temperatur des Katalysators und seiner von der Temperatur abhängenden katalytischen Aktivität erhält man eine relativ genaue Aussage über die Umsatzrate des Katalysators und damit auch über den Verbrauch und die Einspeicherung von Reduktionsmittel im Katalysator.

Das Ziel, den Katalysator im Bereich eines bevorzugten Füllstandes zu halten, wird besonders gut erreicht, wenn die vom Verbrennungsmotor emittierte Stickoxidmenge prozeßbegleitend bestimmt wird. Dabei kann die Stickoxidemission des Motors im jeweils aktuellen Betriebspunkt über elektronisch gespeicherte Kennfelder bestimmt werden, indem bestimmte Größen, die den Betriebspunkt eindeutig beschreiben, wie vorzugsweise Drehzahl, Weg der Regelstange der Einspritzpumpe, Abgastemperatur, während des Betriebes am Motor gemessen werden.

Aufgrund der Giftigkeit von Ammoniak und der von Ammoniak ausgehenden Geruchsbelästigung wird das Reduktionsmittel im Fahrzeug in Form einer wäßrigen Harnstofflösung mitgeführt, aus der nach erfolgter Dosierung in das Abgas die zur katalytischen Umsetzung der Stickoxide benötigte Ammoniakmenge durch Hydrolyse freigesetzt wird. Hierzu wird die wäßrige Harnstofflösung fein verdüst in den Abgasstrom eingebracht und an einem Hydrolysekatalysator zu Ammoniak und Wasserdampf hydrolisiert. Weil es für diesen Hydrolysevorgang und auch für die nachfolgende katalytische Umsetzung der Stickoxide mit Ammoniak eine vom jeweiligen Katalysator und den physikalischen Bedingungen abhängende Mindesttemperatur gibt, ist es zweckmäßig, wenn die überstöchiometrische Zudosierung in der Startphase erst nach Überschreiten einer katalysatorspezifischen Mindesttemperatur erfolgt.

Zur besonders genauen Bestimmung des Füllstandes des Katalysators mit dem Reduktionsmittel können Maßnahmen ergriffen werden, damit der SCR-Katalysator in der Startphase bei Erreichen der katalysatorspezifischen Mindesttemperatur reduktionsmittelfrei vorliegt. Eine geeignete Maßnahme kann beispielsweise das Ausheizen des Katalysators mit einem Blaubrenner vor Inbetriebnahme des Verbrennungsmotors sein. Eine weitere Maßnahme kann auch ein sich an den Normalbetrieb anschließender Betrieb im Standgas über eine Dauer weniger Minuten sein. Außerdem kann auch das "Leerfahren" des Katalysators unmittelbar nach dem Start des Verbrennungsmotors oder während des Betriebes des Verbrennungsmotors (hierbei beschränkt wenige Ausnahmen) vorgesehen sein. Prinzipiell kann auch eine Kombination der genannten Maßnahmen vorgesehen sein.

Um den Abgasstrom von unerwünschten und bei einer unvollständigen Hydrolyse entstehenden Folgeprodukten des Harnstoffs, wie z. B. Cyanursäure, freizuhalten, ist es zweckmäßig, wenn die Zudosierung bei Unterschreitung der katalysatorspezifischen Mindesttemperatur unterbrochen wird. Die Verarmung des Katalysators an Reduktionsmittel während einer solchen Phase kann im Anschluß bei Überschreiten der katalysatorspezifischen Mindesttemperatur wieder durch eine überstöchiometrische Zudosierung aufgefangen werden.

Eine besonders sichere Vermeidung eines nicht tolerierbaren Reduktionsmittelschlupfes wird erreicht, wenn die überstöchiometrische Zudosierung beim Betrieb mit sinkender Abgastemperatur erst nach einer tatsächlich erfolgten Temperaturabsenkung am Katalysator erfolgt. Erst dann ist nämlich der Katalysator in der Lage, aufgrund seiner mit sinkender Temperatur zunehmenden Speicherkapazität tatsächlich Reduktionsmittel einzuspeichern.

Ein Ausführungsbeispiel der Erfindung wird anhand der Figuren naher erläutert. Dabei zeigen:
- Figur 1: in qualitativer Darstellung typische Verläufe der gespeicherten Ammoniakkonzentration C_{NH3} in Abhängigkeit von der Katalysatortemperatur Tₖₐₜ; und
- Figur 2: in schematischer Darstellung die Abgasleitung eines mit Luftüberschuß betriebenen Verbrennungsmotors.

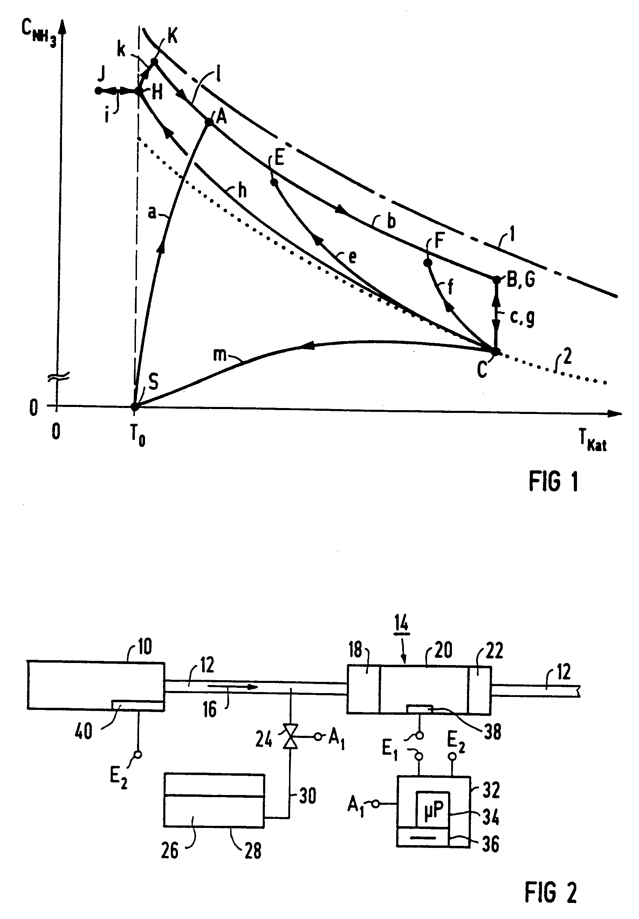

In Figur 1 erkennt man eine strichpunktierte Linie 1 und eine punktierte Linie 2. Die Linie 1 repräsentiert das maximale Speichervermögen eines SCR-Katalysators 20 bei einer überstöchiometrischen Zudosierung eines Reduktionsmittels 26, hier einer wäßrigen Harnstofflösung, die zu Wasser und Ammoniak hydrolysiert. Die Linie 2 repräsentiert das maximale Speichervermögen des SCR-Katalysators 20 für den bei der Hydrolyse entstehenden Ammoniak bei einer geringfügig unterstöchiometrischen Zudosierung des Reduktionsmittels 26 im Bezug zu der im Abgas 16 vorherrschenden Stickoxidkonzentration.

Bei der Inbetriebnahme eines Verbrennungsmotors 10 mit in der Abgasleitung 12 nachgeschalteter Katalysatoreinheit 14, die im hier vorliegenden Fall der Reihe nach aus einem Hydrolysekatalysator 18, dem SCR-Katalysator 20 und einem Oxidationskatalysator 22 besteht, heizt sich die Katalysatoreinheit 14 infolge der vom Abgas 16 übertragenen Wärme zunächst auf eine katalysatorspezifische Mindesttemperatur T₀ auf. Ab dieser Temperatur T₀ wird eine vollständige Hydrolyse der wäßrigen Harnstofflösung im Hydrolysekatalysator 18 erreicht. Gleichzeitig setzt meist oberhalb dieser Mindesttemperatur T₀ auch die katalytische Reaktion der Stickoxide mit dem bei der Hydrolyse entstandenen Ammoniak mit akzeptablen Umsatzraten ein. Man befindet sich zu diesem Betriebspunkt in der Startphase am Punkt S. Bei Erreichen der Mindesttemperatur T₀ setzt nun eine überstöchiometrische Zudosierung der wäßrigen Harnstofflösung und damit eine überstöchiometrische Zudosierung des Ammoniaks in das Abgas ein, so daß sich ein Verlauf gemäß der Linie a ergibt. Mit Erreichen des Punktes A ist ein bevorzugter Füllstand des SCR-Katalysators 20 mit Ammoniak erreicht, so daß nun die überstöchiometrische Zudosierung der Harnstofflösung auf eine geringfügig unterstöchiometrische Zudosierung zurückgenommen wird. Während dieser überstöchiometrischen Dosierung werden die vom SCR-Katalysator 20 verbrauchten Ammoniakmengen und die dem Abgas zudosierten Harnstoffmengen aufsummiert und bei Kenntnis des Temperaturverlaufs der spezifischen Speicherkapazität des SCR-Katalysators 20 und seiner absoluten Speicherkapazität das Erreichen des Punktes A erkannt. Es findet also eine prozeßbegleitende Bestimmung der Katalysatortemperatur und eine prozeßbegleitende Bilanzierung von Stickoxidmengen, verbrauchtem Ammoniak und eingespeichertem Ammoniak statt.

Bei einem weiteren Betrieb des Verbrennungsmotors mit einer Erhöhung der Katalysatortemperatur stellte sich ein Verlauf der gemäß der Kurve b in Richtung zum Punkt B ein. Das Reduktionsmittel wird während dieses Betriebsintervalls geringfügig unterstöchiometrisch zudosiert. Eine Annäherung an die Linie 2 findet aufgrund der Temperaturerhöhung nicht statt, weil diese Temperaturerhöhung von einer Desorption des Reduktionsmittels infolge der mit steigender Temperatur abnehmenden Speicherkapazität begleitet wird.

Wird der Verbrennungsmotor 10 daran anschließend mit weitgehend gleichbleibender Last betrieben, so bleibt auch die Katalysatortemperatur weitgehend konstant. Infolge der geringfügig unterstöchiometrischen Zudosierung des Reduktionsmittels entleert sich der Katalysator nun gemäß der Kurve c in Richtung auf den Punkt C zu, der auf der Linie 2 liegt.

An dieser Stelle der Dosierungsstrategie kann in Abhängigkeit von dem sich an diesen Punkt anschließenden Betriebszustand des Verbrennungsmotors 10 auf verschiedene Arten fortgefahren werden. Eine erste Alternative besteht darin, den SCR-Katalysator 20 durch eine überstöchiometrische Zudosierung entlang der in umgekehrter Richtung zur Kurve c verlaufenden Kurve g wieder aufzufüllen und die überstöchiometrische Zudosierung bei Erreichen des Punkt G, der mit dem Punkt B identisch ist, abzubrechen und fortwährend wieder geringfügig unterstöchiometrisch zuzudosieren.

Drei weitere Alternativen sind gemäß den Verlaufen der Kurven e, f und h vorgesehen. Diese Alternativen sind durch einen Betriebszustand mit fallender Katalysatortemperatur charakterisiert. Aufgrund der mit fallender Katalysatortemperatur zunehmenden Speicherkapazität des SCR-Katalysators 20 für Ammoniak ist es das Ziel einer daraufhin erfolgenden überstöchiometrischen Zudosierung des Reduktionsmittels 26, sich im Verlaufe des Temperaturabfalls wieder möglichst nahe an den Verlauf gemäß der Linien b und l anzunähern. Das Erreichen der Punkte E und F, die nahe oder auf der Linie b liegen, wird von einer Kontrolleinheit 32 registriert, die den Füllstand des SCR-Katalysators 20 mit dem Reduktionsmittel 26 zu jedem Betriebszeitpunkt bestimmt. Ein Sonderfall dieser drei genannten Alternativen ergibt sich, wenn gemäß der Linie h zudosiert und der Punkt H bei der katalysatorspezifischen Mindesttemperatur T₀ erreicht wird.

Bei einem weiteren Absenken der Temperatur gemäß der Linie i zum Punkt I hin wird die Zudosierung unterbrochen und erst wieder aufgenommen, wenn der Punkt H wieder erreicht wird. Bei Wiedererreichen des Punktes H kann daraufhin bei gleichzeitiger Temperaturerhöhung des SCR-Katalysators 20 gemäß der Kurve k überstöchiometrisch zudosiert werden, bis ein Punkt K erreicht ist. Bei einer weiteren Temperaturerhöhung des Katalysators wird infolge der dann einsetzenden unterstöchiometrischen Zudosierung ein Verlauf der Kurven l und b erreicht, so daß der vorgesehene Füllstandsverlauf erneut beschritten wird.

Eine fünfte Alternative bezuglich des Verfahrens ausgehend vom Punkt C stellt die Kurve m dar. So ist es hier vorgesehen, im Anschluß an einen Normalbetrieb des Verbrennungsmotors 10 mit der Zudosierung ganz auszusetzen, wenn sich innerhalb einer Zeitspanne weniger Minuten ein Ende des Betriebes absehen läßt. Auf diese Weise kann beispielsweise der Verbrennungsmotor 10 noch im Leerlauf weiter betrieben werden, bis der SCR-Katalysator 20 vollständig reduktionsmittelfrei "gefahren" ist. Dabei muß die Kurve m nicht zwingend im Punkt S enden, sondern kann die Abszisse auch bei einer höheren oder niedrigeren Temperatur als der Mindesttemperatur T₀ erreichen.

Aufgrund des vorstehend erläuterten Verfahrens werden bei einem derart mit dem Reduktionsmittel, hier Ammoniak, beaufschlagten SCR-Katalysator 20 zu jedem Betriebszeitpunkt besonders hohe Umsatzraten für die im Abgas des Verbrennungsmotors enthaltenen Stickoxide erreicht. Dies wird erreicht, weil zu jedem Betriebszeitpunkt eine ausreichend große Ammoniakmenge im Katalysator gespeichert ist und dort mit vom Katalysator adsorbierten Stickoxiden katalytisch umgesetzt werden kann. Gleichzeitig ist der SCR-Katalysator 20 aufgrund des vorgesehenen Verfahrens aber auch jederzeit in der Lage, die aufgrund einer sprunghaften Temperaturerhöhung des SCR-Katalysators 20 vom SCR-Katalysator 20 desorbierten Ammoniakmengen wieder einzuspeichern, weil der bevorzugte Füllstand von dem maximal erreichbaren Sättigungsfüllstand des SCR-Katalysators abweicht. Hierdurch wird ein Schlupf des Reduktionsmittels während solcher Betriebszustände sicher vermieden.

Figur 2 zeigt in schematischer Darstellung den mit Luftüberschuß betriebenen Verbrennungsmotor 10 und eine daran angeschlossene Abgasleitung 12, in die eine Katalysatoreinheit 14 eingebaut ist. Die Katalysatoreinheit 14 umfaßt in Strömungsrichtung des Abgases 16 den Hydrolysekatalysator 18, den SCR-Katalysator 20 und den Oxidationskatalysator 22. In Strömungsrichtung des Abgases vor der Katalysatoreinheit 14 ist ein einstellbares Eindüsventil 24 für eine wäßrige Harnstofflösung 26 vorgesehen, die aus einem Reduktionsmitteltank 28 über eine Reduktionsmittelzuführungsleitung 30 gefördert wird.

Außerdem ist eine Kontrolleinheit 32 vorgesehen, die eine Mikroprozessoruntereinheit 34 und ein Diskettenlaufwerk 36 umfaßt. Die Kontrolleinheit 32 erfaßt während des Betriebes des Verbrennungsmotors 10 über einen Eingang E1 die mit einer Meßstelle 38 gemessene Temperatur des SCR-Katalysators 20 und über einen Eingang E2 mittels einer Meßstelle 40, die mehrere Sensoren umfassen kann, die betriebsrelevanten Daten des Verbrennungsmotors 10. Aus diesen Daten werden mittels der Mikroprozessoruntereinheit 34 die vom Motor 10 erzeugten Stickoxidmengen bestimmt. Gleichzeitig wird der Betriebszustand des SCR-Katalysators 20 bezüglich seiner katalytischen Aktivität und seiner spezifischen Speicherkapazität bestimmt.

Die hierzu benötigten betriebsrelevanten Daten des SCR-Katalysators 20 können beispielsweise über das Diskettenlaufwerk 36 in der Kontrolleinheit 32 implemetiert werden. Die Stickoxidmenge wird über in der Kontrolleinheit 32 gespeicherte Kennfelder bestimmt, indem die Motordrehzahl, der Weg der Regelstange der Einspritzpumpe und die Abgastemperatur während des Betriebes am Motor 10 mittels der Meßstelle 40 gemessen werden. In Abhängigkeit von der vom Motor 10 erzeugten Stickoxidmenge und dem Betriebszustand des SCR-Katalysator steuert die Kontrolleinheit 32 über einen Ausgang A1 das Eindüsventil 24 für die wäßrige Harnstofflösung in der zu der Figur 1 beschriebenen Weise. Die in das Abgas 16 eingebrachte Harnstofflösung hydrolysiert in dem Hydrolysekatalysator 18 zu Ammoniak und Wasser. Der auf diese Weise freigesetzte Ammoniak wird am SCR-Katalysator 20 ebenso wie die im Abgas 16 enthaltenen Stickoxide absorbiert und reagiert dort katalytisch mit den Stickoxiden zu Stickstoff, Sauerstoff und Wasser. Noch im Abgas enthaltene Kohlenwasserstoffe und Kohlenmonoxid sowie ein möglicherweise aufgrund eines Betriebsfehlers auftretender Ammoniakschlupf werden im nachgeschalteten Oxidationskatalysator 22 beseitigt.

## Patentansprüche

1. Verfahren zur katalytischen Umsetzung von im Abgas (16) eines Verbrennungsmotors (10) enthaltenen Stickoxiden, bei dem ein Reduktionsmittel (26) in Strömungsrichtung des Abgases (16) vor dem Denitrierungs-Katalysator (20) in das Abgas (16) eingebracht wird,
**dadurch gekennzeichnet**, daß das Reduktionsmittel (26) nur in Betriebsintervallen, in denen der Katalysator (20) bevorzugt Reduktionsmittel (26) speichert, insbesondere während der Startphase des Verbrennungsmotors (10) und beim Betrieb mit sinkender und gegebenenfalls nahezu konstanter Abgastemperatur, unter Berücksichtigung der temperaturabhängigen Speicherkapazität des Katalysators (20) für das Reduktionsmittel (26) überstöchiometrisch im Bezug zur Stickoxidkonzentration zudosiert wird und wobei das Reduktionsmittel (26) ansonsten unterstöchiometrisch zudosiert wird.

2. Verfahren nach Anspruch 1,
**dadurch gekennzeichnet**, daß die Temperatur des Katalysators (20) prozeßbegleitend erfaßt wird.

3. Verfahren nach Anspruch 1 oder 2,
**dadurch gekennzeichnet**, daß der aktuelle Füllstand des Katalysators (20) prozeßbegleitend bestimmt wird.

4. Verfahren nach einem der Ansprüche 1 bis 3,
**dadurch gekennzeichnet**, daß die vom Verbrennungsmotor (10) emittierte Stickoxidkonzentration prozeßbegleitend bestimmt wird.

5. Verfahren nach einem der Ansprüche 1 bis 4,
**dadurch gekennzeichnet**, daß die überstöchiometrische Zudosierung in der Startphase erst nach Überschreiten einer katalysatorspezifischen Mindesttemperatur (T₀) erfolgt.

6. Verfahren nach Anspruch 5,
**dadurch gekennzeichnet**, daß Maßnahmen ergriffen werden, damit der Katalysator (20) in der Startphase bei Erreichen der katalysatorspezifischen Mindesttemperatur (T0) reduktionsmittelfrei vorliegt.

7. Verfahren nach Anspruch 5 oder 6,
**dadurch gekennzeichnet**, daß die Zudosierung bei Unterschreitung der katalysatorspezifischen Mindesttemperatur (T₀) unterbrochen wird.

8. Verfahren nach einem der Ansprüche 1 bis 7,
**dadurch gekennzeichnet**, daß die überstöchiometrische Zudosierung beim Betrieb mit sinkender Abgastemperatur erst nach einer tatsächlichen erfolgten Temperaturabsenkung am Katalysator (20) erfolgt.

## Claims

1. Method for the catalytic conversion of nitrogen oxides present in the exhaust gas (16) of an internal-combustion engine (10), in which a reducing agent (26) is introduced into the exhaust gas (16) upstream of the denitration catalyst (20) in the direction of flow of the exhaust gas (16),
characterized in that the reducing agent (26) is fed superstoichiometrically in relation to the nitrogen oxide concentration only during operating periods in which the catalyst (20) preferentially stores reducing agent (26), in particular during the internal-combustion engine (10) starting phase and during operation with decreasing and, if appropriate, virtually constant exhaust gas temperature, taking into account the temperature-dependent storage capacity of the catalyst (20) for the reducing agent (26), and the reducing agent (26) otherwise being fed substoichiometrically.

2. Method according to Claim 1, characterized in that the catalyst (20) temperature is determined on-line.

3. Method according to Claim 1 or 2, characterized in that the current charge level of the catalyst (20) is determined on-line.

4. Method according to one of Claims 1 to 3, characterized in that the nitrogen oxide concentration emitted from the internal-combustion engine (10) is determined on-line.

5. Method according to one of Claims 1 to 4, characterized in that the superstoichiometric feed in the starting phase is not performed until a catalyst-specific minimum temperature (T₀) is exceeded.

6. Method according to Claim 5, characterized in that measures are taken so that the catalyst (20) is present free of reducing agent in the starting phase when the catalyst-specific minimum temperature (T₀) is reached.

7. Method according to Claim 5 or 6, characterized in that the feed is interrupted when the temperature falls below the catalyst-specific minimum temperature (T₀).

8. Method according to one of Claims 1 to 7, characterized in that the superstoichiometric feed during operation with decreasing exhaust gas temperature is not performed until the temperature actually decreases at the catalyst (20).

## Revendications

1. Procédé de conversion catalytique d'oxydes d'azote contenus dans le gaz d'échappement (16) d'un moteur à combustion interne (10), dans lequel il est introduit, en amont, dans le sens de l'écoulement du gaz d'échappement (16), du pot catalytique de dénitrification (20), un réducteur (26) dans le gaz d'échappement (16),
caractérisé en ce qu'il consiste à n'accumuler le réducteur (26) que pendant des intervalles de fonctionnement dans lesquels le pot catalytique (20) accumule de préférence le réducteur (26), notamment à l'ajouter, pendant la phase de démarrage du moteur à combustion interne (10) et dans le cas d'un fonctionnement avec abaissement de la température du gaz d'échappement et, le cas échéant, à température presque constante, en tenant compte de la capacité d'accumulation du réducteur (26) par le pot catalytique (20), qui dépend de la température, dans une proportion supérieure à la stoechiométrie par rapport à la concentration des oxydes d'azote, le réducteur (26) étant ajouté sinon dans une proportion inférieure à la stoechiométrie.

2. Procédé selon la revendication 1, caractérisé en ce que la température du pot catalytique (20) est déterminée tout au long du procédé.

3. Procédé selon les revendications 1 ou 2, caractérisé en ce qu'on détermine tout au long du procédé le niveau de remplissage du pot catalytique (20).

4. Procédé selon l'une des revendications 1 à 3, caractérisé en ce que la concentration en oxydes d'azote émis par le moteur à combustion interne (10) est déterminée tout au long du procédé.

5. Procédé selon l'une des revendications 1 à 4, caractérisé en ce que l'ajout hyper-stoechiométrique dans la phase de démarrage ne s'effectue que lorsqu'une température minima T₀ spécifique du pot catalytique est dépassée.

6. Procédé selon la revendication 5, caractérisé en ce qu'il consiste à prendre des mesures pour que le pot catalytique (20) soit exempt de réducteur dans la phase de démarrage lorsqu'une température minima (T₀) spécifique du pot catalytique est atteinte.

7. Procédé selon les revendications 5 ou 6, caractérisé en ce que l'addition est interrompue lorsque la température s'abaisse au-dessous de la température minima (T₀) spécifique du pot catalytique.

8. Procédé selon l'une des revendications 1 à 7, caractérisé en ce que l'ajout hyper-stoechiométrique, lors du fonctionnement avec abaissement de la température du gaz, n'est effectué qu'après un abaissement effectif de la température du pot catalytique (20).
